# EUROPEAN PATENT SPECIFICATION

(11) **EP 2 920 241 B1**
(45) Date of publication and mention of the grant of the patent: **25.10.2017**
(21) Application number: 13801828.8
(22) Date of filing: 13.11.2013
(51) Int. Cl.: C08L 25/14, C08L 25/06, C08L 51/04, C08F 212/08, C08F 220/32, C08F 212/14

(54) **SELF-EXTINGUISHING POLYMERIC COMPOSITION**
SELBSTLÖSCHENDE POLYMERZUSAMMENSETZUNG
COMPOSITION POLYMÈRE AUTO-EXTINGUIBLE

(30) Priority: 19.11.2012 IT MI20121962
(43) Date of publication of application: 23.09.2015
(73) Proprietor: Versalis S.p.A, 20097 S. Donato Milanese (MI) (IT)
(72) Inventor: CASALINI, Alessandro, I-46100 Mantova (IT); LONGO, Aldo, I-46100 Mantova (IT); PONTICIELLO, Antonio, I-37060 Mozzecane (Verona) (IT)
(74) Representative: Murgitroyd & Company
(86) International application number: PCT/IB2013/060108
(87) International publication number: WO 2014/076644

(56) References cited:
- US-A1- 2008 160 240
- US-A1- 2008 221 255
- US-A1- 2010 041 800

## Description

The present invention relates to a stabilized self-extinguishing vinylaromatic polymeric composition.

In the preparation of polymeric compositions having flame-retardant properties based on vinylaromatic polymers, halogenated organic additives are used, in which the halogen is bromine and/or chlorine. Said additives can be mixed in the molten state with the polymeric mass to provide an improved fire-resistance.

A halogenated organic additive is a compound which releases halogen radicals at the flash points, so that the radicals produced by reaction with atmospheric oxygen react with said halogen radicals instead of with the vinylaromatic polymeric compound. A good halogenated flame-retardant additive must be miscible with the polymeric mass, stable at the mixing temperature (180°C - 230°C) and unstable at the flash points.

Halogenated organic compounds suitable as flame-retardants, such as hexabromocyclododecane and brominated styrene-butadiene copolymers, are effective for passing standard flame-resistance tests and have a good miscibility with the vinylaromatic polymer; they can, however, release significant quantities of hydrogen halide at the temperatures at which the mixtures are prepared with the vinylaromatic polymer.

In order to avoid instability of the halogenated organic compound, basic reactive inorganic substances such as oxides or hydroxides of alkaline or alkaline-earth metals, and organic substances containing epoxides which capture the hydrogen halide produced during the mixing, can be added in the mixing phase with the polymer. Said compounds react with the hydrogen halide which develops, forming stable halogen salts and halohydrins which, however, reduce the halogen available for the flame-retardant action in the polymeric mixture.

It is therefore known in the state of the art that compounds containing epoxy groups can be used as further additives, in addition to the flame-retardant, for improving the stability of self-extinguishing polymers. The use of halogenated flame retardants containing epoxy groups is also known. Some patent documents of the known art are briefly described hereunder.

US 4,032,481 discloses a process for preparing expandable polystyrene with a reduced flammability. The process is carried out in aqueous suspension at temperatures not higher than 115°C, in the presence of halogenated flame-retardant agents, epoxidized soybean oils, glycidyl ether of bisphenol A, barium salts of phenol derivatives, cadmium salts of organic acids and cresol phosphites.

EP 0066686 describes a polymeric composition containing expandable polystyrene and a quantity lower than 0.1% by weight of epoxidized aliphatic hydrocarbons, having from 6 to 18 carbon atoms, soluble in the vinyl aromatic monomer. Said composition allows the minimum residence time at the expansion temperatures to be increased to allow the end-product to be cooled without deteriorating the structure of the cells forming the expanded end-product. The miscibility of the epoxidized hydrocarbons in the monomer does not guarantee a good dispersion of the same in the polymer obtained by polymerization of the monomeric mixture.

DE 3402539 discloses polyolefins, vinylaromatic polymers and polyesters with an improved stability to degradation containing a flame-retardant, such as tetrabromobisphenol A bis(dibromopropyl) ether or hexabromocyclododecane, and an epoxy resin of bisphenol A epichlorohydrin.

EP 848727 relates to polymeric compositions containing hexabromocyclododecane and an epoxy resin as thermal stabilizer. The epoxy resins used contain a halogen, bromine or chlorine, and have an epoxide equivalent ranging from 150 g/eq to 800 g/eq. A particular composition described in EP 848727 comprises polystyrene or copolymers of styrene and at least one halogenated epoxy resin in a quantity equal to at least 0.5% by weight.

WO 2011/008417 (also US 2010331497) describes a brominated and epoxidized organic compound, contemporaneously containing bromine and at least one epoxy group. Said compound is used as flame-retardant in polymers and copolymers of styrene.

This compound is obtained starting from polymers and copolymers of a conjugated diene monomer, preferably butadiene, such as for example styrene/butadiene copolymers and block copolymers. In one phase, said polymers and copolymers are brominated with suitable brominating agents and in another phase epoxidized with a suitable oxidizing agent according to an arbitrary order.

US 2008/221255 relates to polymeric compositions having improved flame-retardance and containing about 5% to about 100% by weight of an epoxy group vinyl copolymer and from 3 to 20 parts by weight of brominated flame retardant. In particular, US 2008/221255 discloses a thermoplastic resin composition comprising:
(C) about 30 to about 99 parts by weight of an epoxy group-containing styrenic polymer comprising:
   - (A1) about 5 to about 100% by weight of an epoxy group containing vinyl copolymer; and
   - (A2) about 0 to about 95% by weight of a rubber modified styrenic copolymer resin; and
(D) from 1 to 70 parts by weight of a polyester resin.

An objective of the present invention is to improve the thermal stability of halogenated flame-retardant agents in self-extinguishing polymeric compositions containing vinylaromatic polymers, maintaining the efficacy of the flame-retardant agents and in economically advantageous concentrations.

In this respect, the Applicant has found a vinyl aromatic copolymer containing, as main unit, monomeric units of at least one vinylaromatic monomer, and containing, as secondary unit, monomeric units of at least one type of vinyl monomer containing epoxy groups (in the present text also indicated as vinyl comonomers containing epoxy groups). Said vinyl aromatic copolymer can possibly also contain, as secondary unit, monomeric units of one or more types of vinyl monomers not containing epoxy groups. Said copolymer, if homogeneously distributed in a self-extinguishing polymeric composition, is capable of stabilizing the hydrogen halide which develops from a halogenated organic additive, normally used as flame-retardant. In particular, almost any hydrogen halide molecule which develops in the self-extinguishing polymeric composition, reacts with an epoxy group, therefore in a ratio of about 1:1, surprisingly without limiting the efficacy of the action of the halogenated additive in standard flame-resistance tests of said compositions.

For the purposes of the present invention, a copolymer is homogeneously distributed in a polymeric composition when the same is finely dispersed (or uniformly dispersed) so as to form a uniform mixture even if heterogeneous.

A homogeneous distribution of the copolymer in the polymeric composition is important as it allows the whole composition to be protected with a minimum quantity of epoxy groups.

Furthermore, the halohydrins which are formed following the reaction of the epoxy groups with hydrogen halide, still behave as flame retardants.

An object of the present invention therefore relates to a self-extinguishing polymeric composition comprising:
a. a stabilizing polymeric composition containing:
   iii. from 1 to 100% by weight of at least one copolymer containing, as main unit, monomeric units of at least one type of vinylaromatic monomer, and containing monomeric units of at least one type of vinyl monomer containing epoxy groups wherein the oxirane oxygen, calculated with respect to the whole copolymer (i) ranges from 70 to 5,000 ppm by weight; such that the copolymer is homogenously distributed in the polymeric composition when the same is finely dispersed;
   iv. from 0% by weight to 99% by weight of one or more vinylaromatic polymers compatible with each other;
b. from 0.03 phr by weight to 10 phr by weight, calculated on the basis of component (a), of at least one halogenated flame-retardant agent.

The copolymers (i) and polymers (ii) can also contain monomeric units of one or more vinyl monomers not containing epoxy groups.

The presence of epoxy groups is effective in protecting the whole self-extinguishing polymeric composition from degradation induced by the release of halogens coming from the halogenated additives, at the temperatures adopted for mixing the same additives. An oxirane oxygen content higher than 5,000 ppm by weight does not allow a homogeneous distribution of the copolymer (i) in the polymeric composition, jeopardizing the protective efficacy of the same composition. Quantities lower than 70 ppm are not sufficient for protecting the self-extinguishing polymeric composition from the hydrogen halides produced by the decomposition of the halogenated flame-retardant agent. The improved stability obtained together with a surprising maintenance of the self-extinguishing efficacy, leads to a reduced use of halogenated additives and a lesser production of hydrogen halides. A further advantage deriving from the improved stability is that self-extinguishing vinylaromatic polymeric compositions with a greater viscosity can be processed, at higher temperatures, thus obtaining end-products having enhanced behavioural properties.

### Detailed description

For the purposes of the present invention, the term "comprise" or "include" also comprises the case "essentially consisting of" or "only consisting in"

For the purposes of the present invention, phr, defined as "parts per 100 parts of the formulation" means "parts per 100 parts of component (a)"

The present invention relates to a self-extinguishing polymeric composition comprising:
b. a stabilizing polymeric composition containing:
   iii. from 1 to 100% by weight of at least one copolymer containing, as main unit, monomeric units of at least one type of vinylaromatic monomer, and containing monomeric units of at least one type of vinyl monomer containing epoxy groups wherein the oxirane oxygen, calculated with respect to the whole copolymer (i) ranges from 70 to 5,000 ppm by weight; such that the copolymer is homogenously distributed in the polymeric composition when the same is finely dispersed.
   iv. from 0% by weight to 99% by weight of one or more vinylaromatic polymers compatible with each other;
b. from 0.03 phr by weight to 10 phr by weight, calculated on the basis of component (a), of at least one halogenated flame-retardant agent.

The copolymers (i) and polymers (ii) can also contain monomeric units of one or more vinyl monomers not containing epoxy groups.

The vinylaromatic polymers (ii) used in the present invention can be polymers obtained by homo- or copolymerization of vinylaromatic monomers (in the present text indicated as monomeric units of vinylaromatic monomers) having general formula (1): 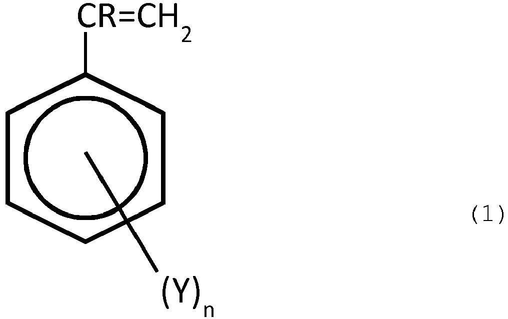 wherein R is a hydrogen or a methyl group, n is zero or an integer ranging from 1 to 3, Y is a halogen, such as chlorine or bromine, or Y is a chloromethyl or an alkyl group or an alkoxyl group having from 1 to 3 carbon atoms.

Preferred vinylaromatic monomers having general formula (1) are selected from styrene, α-methylstyrene, isomers of vinyltoluene, isomers of ethylstyrene, isomers of propylstyrene, isomers of chlorostyrene, isomers of methylchlorostyrene, isomers of methoxystyrene, isomers of acetoxystyrene, hydroxystyrene, isomers of methylhydroxystyrene and mixtures thereof. Said vinylaromatic monomers are more preferably selected from styrene and α-methylstyrene.

The vinylaromatic polymers (ii) used in the present invention can be selected from copolymers comprising, as main components, vinylaromatic monomers having formula (1) and vinyl comonomers selected from dienes, nitriles, C₁-C₈ alkyl esters derivatives of acrylic and methacrylic acid, vinylacetate and mixtures of the same. Said polymers are more preferably selected from styrene-butadiene, styrene-isoprene, hydrogenated styrene-butadiene, hydrogenated styrene-isoprene, styrene-acrylonitrile, styrene-alkylacrylate, styrene-alkylmethacrylate, styrene-butadiene-alkylacrylate, styrene-butadiene-alkylmethacrylate, styrene-acrylonitrile-alkylacrylate, styrene-vinylacetate.

The vinylaromatic polymers (ii) used in the polymeric composition, object of the present invention, can be selected from mixtures of vinylaromatic copolymers toughened with other copolymers, preferably polyethylenes, ethylene-vinylacetate copolymers, diene polymers, ethylene-propylene-diene terpolymers, block polymers such as styrene-butadiene, styrene-isoprene, styrene-ethylene-butylene-styrene, hydrogenated styrene-butadiene, hydrogenated styrene-isoprene.

The vinylaromatic polymers (ii) of the polymeric composition, object of the present invention, can be selected from vinylaromatic copolymers grafted on other polymers such as those obtained from styrene, styrene-acrylonitrile, styrene-methylmethacrylate, styrene-butylacrylate, styrene-acrylonitrile- methylmethacrylate, styrene-acrylonitrile-butylacrylate, styrene-acrylonitrile-maleimide grafted on polyethylenes, ethylene-vinylacetate copolymers, diene polymers, ethylene-propylene-diene terpolymers, block polymers such as styrene-butadiene, styrene-isoprene, styrene-ethylene-butylene-styrene, hydrogenated styrene-butadiene, hydrogenated styrene-isoprene.

The copolymers (i) containing vinylaromatic monomers, vinyl monomers containing epoxy groups and possibly other vinyl monomers not containing epoxy groups, can be obtained by radical copolymerization according to laws widely known and described, as described, for example, by George E. Ham, Copolymerization, Interscience Publisher, 1964.

Said copolymers (i) can also be obtained by the modification of copolymers with vinylaromatic monomers and possibly with vinyl monomers not containing epoxy groups, as described for example by Frechet J.M.J. e Eichler E. in Polymer Bulletin, Vol. 7, File 7, pages 345-351 (1982).

The copolymer (i) must contain epoxy groups so that the oxirane oxygen contained therein ranges from 70 ppm to 5000 ppm by weight calculated with respect to the whole copolymer (i).

Quantities lower than 70 ppm are not sufficient for protecting a self-extinguishing polymeric composition from the hydrogen halides produced by the decomposition of the halogenated flame-retardant agent; whereas quantities higher than 5000 ppm are either excessive and economically inconvenient or they do not allow a homogeneous distribution of component (i) with (ii) to be formed.

Preferred copolymers (i) can be styrene-glycidylmethacrylate, styrene-glycidyloxystyrene, styrene-2,3-epoxypropylvinylbenzylether, styrene-alphamethylstyrene-glycidylmethacrylate terpolymer and styrene-alphamethylstyrene-2,3-epoxypropylvinylbenzylether terpolymer.

The vinyl monomers containing epoxy groups (in the present text indicated as monomeric units of vinyl monomers containing epoxy groups) can be preferably selected from styrenes substituted on the benzene ring, epoxidized derivatives of hydroxystyrene or hydroxymethylstyrene, ester derivatives of acrylic and methacrylic acid and epichlorohydrin or oligomers of bisphenol and epichlorohydrin. Said monomers can be more preferably selected from glycidylmethacrylate, glycidyloxystyrene and 2,3-epoxypropylvinylbenzylether and the products deriving from the reaction of hydroxystyrene, hydroxymethylstyrene and methacrylic acid with epoxy resins composed of bisphenols and epichlorohydrin. Glycidyloxystyrene can be prepared as described in WO 2008/085513 and 2,3-epoxypropylvinylbenzylether as described by Tomoi M., Oda H. and Kakiuchi in Makromolekulare Chemie, Rapid Communications, Vol. 7, pages 143-148 (1986). The vinyl monomer containing epoxy groups which is most widely-used and available on a commercial scale is glycidylmethacrylate.

Vinyl monomers not containing epoxy groups of the copolymer (i) can be preferably selected from dienes, nitriles, C₁-C₈ alkyl esters deriving from acrylic and methacrylic acid, vinyl acetate and mixtures thereof.

The self-extinguishing compositions described and claimed in the present text can comprise at least one flame-retardant agent containing a halogenated substance on aliphatic carbons. Preferred flame-retardants are selected from hexabromocyclododecane, pentabromomo-nochlorocyclhoexane, pentabromophenylallylether, a brominated styrene-butadiene copolymer, tetrabromobisphenol A bis-dibromopropyl ether. The halogenated flame-retardants can preferably be present in a quantity ranging from 0.03 phr by weight to 10 phr by weight, calculated on the basis of component (a).

The self-extinguishing compositions described and claimed in the present text can also comprise a quantity ranging from 0 phr by weight to 4 phr by weight, calculated on the basis of component (a), of a synergic agent, more preferably from 0.1 phr by weight to 1 phr by weight. The synergic agent is present in particular in the self-extinguishing polymeric compositions, object of the present invention, which also comprise an expanding agent, from which expanded articles and polymeric foams can be obtained. A synergic agent is defined as a substance capable of generating radicals which induce the degradation of the halogenated flame-retardant agent with the formation of halogen radicals at the flash points. Said synergic agent can be preferably selected from a peroxide or unstable hydrocarbon. The synergic agent is more preferably selected from 2,3-dimethyl-2,3-diphenylbutane, 3,4-dimethyl-3,4-diphenylhexane, 3,6,9-triethyl-3,6,9-trimethyl-1,4,7-triperoxynonane.

For the production of expanded articles and therefore in expandable self-extinguishing polymeric compositions, the self-extinguishing compositions, object of the present invention, can also comprise a quantity ranging from 0.2 phr by weight to 10 phr by weight, calculated on the basis of component (a), of an expanding agent, more preferably from 1 phr by weight to 10 phr by weight.

Any expanding agent commonly used, capable of being englobed in a vinylaromatic polymer, can be adopted in the compositions, object of the present invention. Examples of expanding agents used are aliphatic hydrocarbons, Freon, carbon dioxide, alcohols such as ethyl alcohol, water.

For the production of expanded articles or polymeric foams for applications in thermal insulation, and therefore in expandable self-extinguishing polymeric compositions, the self-extinguishing compositions, object of the present invention, can also comprise a quantity ranging from 0 phr by weight to 25 phr by weight, more preferably from 0.2 phr by weight to 25 phr by weight, even more preferably from 1 phr by weight to 20 phr by weight, calculated on the basis of component (a), of an athermanous additive. The athermanous additive is more preferably selected from carbon black, coke or graphite, the athermanous additive is even more preferably coke.

Carbon coke (or simply coke) is available as a finely subdivided powder with a powder particle size (MT50) ranging from 0.5 to 100 microns, preferably from 2 to 20 microns. The particle size (MT50 or d₅₀) is measured with a laser granulometer and is the diameter which corresponds to 50% by weight of particles having a smaller diameter and 50% by weight of particles having a larger diameter. Diameter refers to the particle size measured with a laser granulometer as described above.

Coke is produced by the pyrolysis of organic material and at least partly passes through a liquid or liquid-crystalline state during the carbonization process. The starting organic material is preferably petroleum, carbon or lignite.

The coke used in the preparation of the polymeric compositions in granule form, object of the present invention, is more preferably the carbonization product of the high-boiling fraction of hydrocarbons coming from the distillation of petroleum, conveniently known as heavy residual fraction. In particular, coke is obtained starting from the coking of the heavy residual fraction, an operation carried out at a high temperature which produces further light fractions and a solid (petroleum coke). The petroleum coke thus obtained, is calcined at a temperature ranging from 1000 to 1600°C (calcined coke).

If a heavy residual fraction rich in aromatic components is used, a coke with a needle-like crystalline structure (needle coke) is obtained, after calcination at 1800-2200°C.

Greater details on coke, the production methods and characterization of the various grades commercially available (green coke, coal-derived pitch coke, delayed coke, fluid coke, needle coke, premium coke, calcined coke, shot, spange, etc.) can be found in internet, in the site: goldbook.iupac.org or in Pure Appl. Chem., 1995, Vol. 67, N. 3, pages 473-506 "Recommended terminology for the description of carbon as a solid (IUPAC Recommendations 1995)".

Athermanous additives are mainly used as additives in panels in the building industry, consisting of vinylaromatic polymers expanded or foamed with expanding agents, and are mainly composed of carbon in the form of coke, natural or expanded graphite and carbon black. These additives reduce the thermal stability of the halogenated flame-retardant agent and impose lower mixing temperatures with the vinylaromatic polymer with consequent difficulties in the mixing itself due to the high viscosities of the polymeric mass. Other inorganic additives that absorb radiation between 100 cm⁻¹ and 20000 cm⁻¹, as revealed by a near-medium infrared light analyzer, are titanates, titanium oxides, silicon oxides, oxides and hydroxides of aluminium, barium sulfate, aluminosilicates, calcium and magnesium silicates, calcium and magnesium carbonates, calcium and zinc oxide, bentonite.

The compositions, object of the present invention, are particularly effective when they contain coke as athermanous additive. Said compositions are therefore particularly advantageous for the production of expanded articles to be used in thermal insulation. In these cases, in fact, a significant decrease in the formation phenomenon of hydrogen halides induced by the thermal degradation of the flame-retardant, is observed, as also illustrated by the examples provided in the present text.

The self-extinguishing compositions described and claimed in the present text can also comprise a quantity ranging from 0 phr by weight to 50 phr by weight, calculated on the basis of component (a), of additives consisting of lubricants, dyes, antistatic agents, detaching agents, antioxidants, nucleating agents.

For the production of compact articles, the self-extinguishing compositions described and claimed in the present text can comprise a quantity ranging from 0 phr by weight to 50 phr by weight, more preferably from 0.01 phr by weight to 10 phr by weight, calculated on the basis of component (a), of one or more additives consisting of lubricants, dyes, antistatic agents, detaching agents, antioxidants.

The self-extinguishing polymeric compositions described and claimed in the present text can be used for the production of compact articles, expandable beads, expanded articles and polymeric foams.

The compositions, object of the present invention, are particularly suitable for applications which require, in the preparation process or processing, at least one passage of said flame-retardant composition in a static or dynamic mixer at 180-230°C. Said compositions are more preferably suitable in the preparation of beads of vinylaromatic polymer with an expanding agent via a continuous mass process; in the preparation of extruded foams in the presence of expanding agents; in the preparation of polymeric blends for subsequent transformations in extrusion, thermosetting or injection moulding.

Some illustrative examples are provided for a better understanding of the invention and application range, which, however, should not be considered as limiting the scope of the present invention EXAMPLES

Examples of the preparation of the copolymer of vinylaromatic monomer and vinyl monomer with bound epoxy groups.

### EXAMPLE 1: preparation of a random styrene-glycidylmethacrylate copolymer with 2.3% of GMA equal to 2589 wppm of oxirane oxygen.

1657.8 g of styrene (Versalis S.p.A., San Donato Milanese - Italy), 34.2 g of glycidylmethacrylate (Sigma-Aldrich, Milan - Italy), 108 g of ethylbenzene solvent (Versalis S.p.A., San Donato Milanese - Italy) and 1.1 g of tert-dodecylmercaptane chain-transfer agent (Sigma-Aldrich, Milan - Italy) were charged, at 20°C, in a nitrogen atmosphere, into a 2.4 litre reactor equipped with an anchor stirrer, a temperature probe immersed in the reaction mixture and a thermostating jacket with circulation of silicon oil thermostat-regulated with an external thermostatic bath. On heating the thermostating oil circulating in the jacket of the reactor, the temperature of the reaction mixture was increased to 125°C in 2 hours and the reaction temperature was then kept constant at 125°C for 5 hours. At the end of 5 hours at 125°C, the reaction mixture containing about 50% of polymer was discharged into steel cylinders in fractions of 120 g per cylinder. The cylinders were placed in an oven with electric heating and were heated to 150 °C for 3 hours. At the end of the thermostating period at 150°C, a vacuum was applied in the oven containing the cylinders up to a residual pressure of 20 mbar, the temperature in the oven was then brought to 220°C in about one hour and kept constant for 30' minutes. After cooling the oven, the polymer contained in the cylinders was extracted and ground in a mill. The polymer granule obtained (1350 g) was analyzed and a content of 2.3% w/w of glycidylmethacrylate was determined (by analysis of the epoxide content with the method ASTM D1652-04) together with a MFR (200°C/5kg) of 7.2 g/10 min (method ISO 1133).

### EXAMPLE 2: preparation of a random styrene-glycidylmethacrylate copolymer with 3.5% of GMA equal to 3940 wppm of oxirane oxygen.

The same procedure was adopted as for Example 1, but the formulation is the following: 1640 g of styrene, 52 g of glycidylmethacrylate, 108 g of ethylbenzene and 1.1 g di tert-dodecylmercaptane. The polymer granule obtained (1360 g) was analyzed and a content of 3.5% w/w of glycidylmethacrylate was determined and a MFR (200°C/5kg) of 7.3 g/10 min.

### EXAMPLE 3: preparation of a random styrene-glycidylmethacrylate copolymer with 14.8% of GMA equal to 16658 wppm of oxirane oxygen.

The same procedure was adopted as for Example 1, but the formulation is the following: 1479.1 g of styrene, 212.9 g of glycidylmethacrylate, 108 g of ethylbenzene and 1.44 g di tert-dodecylmercaptane. The polymer granule obtained (1380 g) was analyzed and a content of 14.8% w/w of glycidylmethacrylate was determined and a MFR (200°C/5kg) of 17.1 g/10 min.

### EXAMPLE 4:

The same procedure was adopted as for Example 1, but the formulation is the following: 846 g of styrene, 846 g of glycidylmethacrylate, 108 g of ethylbenzene and 1.1 g di tert-dodecylmercaptane. In this example, it can be seen that it is not possible to prepare a styrene-glycidylmethacrylate copolymer at 55% of glycidylmethacrylate as it is crosslinked (insoluble and not thermoplastic). The polymer obtained is insoluble and non-processable.

### EXAMPLE 5: preparation of a styrene-p-glycidyloxystyrene copolymer containing 2.8% of p-glycidyloxystyrene equal to 2542 wppm of oxirane oxygen.

43.0 g of p-hydroxycinnamic acid (Sigma-Aldrich, Milan - Italy) and 136.2 g of N,N dimethylacetamide (Sigma-Aldrich, Milan - Italy), were charged at 20°C, in a nitrogen atmosphere, under stirring, into an 0.5 litre glass reactor equipped with a magnetic stirrer, reflux cooler, temperature probe immersed in the reaction mixture and a thermostating jacket with circulation of silicon oil thermostat-regulated with an external thermostatic bath. After 10 minutes, 0.36 g of potassium acetate (Sigma-Aldrich, Milan - Italy) were added in a nitrogen atmosphere, and, on heating the thermostating oil circulating in the jacket of the reactor, the temperature of the reaction mixture was increased to 150°C in 2 hours and the reaction temperature was then kept constant at 150°C for 3 hours and 30 minutes, converting the p-hydroxycinnamic acid to p-hydroxystyrene. After cooling the reaction mixture to 20°C, the reflux cooler was substituted with a distillation head connected to a cooler, a glass collection flask of the condensate and a vacuum pump. The reaction mixture was concentrated at 40°C, with 33 Pa of residual pressure, removing 68.2 g of N,N dimethylacetamide. 16.1 g of potassium hydrate (Sigma-Aldrich, Milan - Italy) finely ground in a dry box, the reaction mixture removed from the 0.5 litre reactor and 358.6 g of epichlorohydrin (Sigma-Aldrich, Milan - Italy), were charged, in a nitrogen atmosphere, into a 1 litre steel reactor with discharge from the bottom with a ball valve, a magnetic entrainment stirring system and anchor stirrer, a temperature probe immersed in the reaction mixture, a thermostating jacket with circulation of silicon oil thermostat-regulated with an external thermostatic bath and a reflux cooler. The reaction mixture thus obtained was brought to 90°C by heating the thermostating oil circulating in the jacket of the reactor, kept at 90°C for an hour and then cooled to 25°C. The resulting reaction mixture was collected in a glass flask after discharging from the bottom of the reactor. The washing liquid obtained by spraying about 100 ml of N,N dimethylacetamide on the walls of the reactor and on the inserts, was collected in the same flask. The contents of the flask cooled to 4°C were filtered on a gutsch having a medium porosity and then on a polytetrafluoroethylene filter with pores having an average diameter of 0.45 microns and washed with 100 ml of N,N dimethylacetamide. The liquid filtered was concentrated in the same 1 litre steel reactor used in the reaction with epichlorohydrin. By substituting the cooler with a condensation head and applying a vacuum, the excess epichlorohydrin was removed together with part of the N,N dimethylacetamide. At the end, a solution with about 43 g of p-glycidyloxystyrene and about 45 g of N,N dimethylacetamide is obtained.

In the reactor and with the same procedure as adopted in Example 1, but with the formulation given by 88 g of a solution of p-glycidyloxystyrene and N,N dimethylacetamide obtained as described above, 1649 g of styrene, 63 g of ethylbenzene and 1.1 g di tert-dodecylmercaptane, 1340 g of polymer granule are obtained with a content of 2.8% w/w of p-glycidyloxystyrene and a MFR (200°C/5kg) of 8.4 g/10 min.

### EXAMPLE 6: preparation of a styrene-p-glycidyloxymethylstyrene copolymer containing 3.0% of p-glycidyloxymethylstyrene equal to 2523 wppm of oxirane oxygen.

16.2 g of potassium hydrate finely ground in a dry box, 41.3 g of hydroxymethylstyrene (Sigma-Aldrich, Milan - Italy) and 359.0 g of epichlorohydrin, were charged, in a nitrogen atmosphere, into a 1 litre steel reactor with discharge from the bottom with a ball valve, a magnetic entrainment stirring system and anchor stirrer, a temperature probe immersed in the reaction mixture, a thermostating jacket with circulation of silicon oil thermostat-regulated with an external thermostatic bath and a reflux cooler. The reaction mixture thus obtained was brought to 90°C by heating the thermostating oil circulating in the jacket of the reactor, kept at 90°C for an hour and then cooled to 25°C. The resulting reaction mixture was collected in a glass after discharging from the bottom of the reactor. The washing liquid obtained by spraying about 100 ml of N,N dimethylacetamide on the walls of the reactor and on the inserts, was collected in the same glass. The contents of the glass were filtered on a gutsch having a medium porosity and then on a polytetrafluoroethylene filter with pores having an average diameter of 0.45 microns and washed with 50 ml of N,N dimethylacetamide. The liquid filtered was concentrated in the same 1 litre steel reactor used in the reaction with epichlorohydrin. By substituting the cooler with a condensation head and applying a vacuum, the excess epichlorohydrin was removed together with part of the N,N dimethylacetamide. At the end, a solution with about 47 g of 2,3-epoxypropylvinylbenzylether and about 50 g of N,N dimethylacetamide is obtained.

In the reactor and with the same procedure as adopted in Example 1, but with the formulation given by 97 g of a solution of 2,3-epoxypropylvinylbenzylether and N,N dimethylacetamide obtained as described above, 1645 g of styrene, 58 g of ethylbenzene and 1.1 g di tert-dodecylmercaptane, 1355 g of polymer granule are obtained with a content of 3.0% w/w of 2,3-epoxypropylvinylbenzylether and a MFR (200°C/5kg) of 7.6 g/10 min.

### Verification examples of the improved thermal stability of EBCD (examples for EPS and HIPS)

The mixtures indicated in Table 1 (the numbers refer to the parts of each component in the mixture) were dry prepared in a rotating cylinder (mixer), extruded in a Werner twin-screw extruder at 180°C-220°C with a residence time of 1-2 minutes and granulated:

**Table 1**

| | Coke 4023 Asbury [parts] | Polystyrene EDISTIR N2982 [parts] | Stabilizer [parts] |
|---|---|---|---|
| MIX CB1 | 50 | 50 | 0 |
| MIX CB2 | 50 | 0 | EXAMPLE 1 50 |
| MIX CB3 | 50 | 35.5 | EXAMPLE 3 14.5 |
| MIX CB4 | 50 | 23.2 | LOTADER AX8905 26.8 |
| MIX CB5 | 50 | 0 | EXAMPLE 5 50 |
| MIX CB6 | 50 | 0 | EXAMPLE 6 50 |

EDISTIR N2982 (Versalis S.p.A., San Donato Milanese - Italy) is a polystyrene homopolymer for general uses (GPPS) with a MFR (200°C/5kg) of 25 g/10 min
LOTADER AX8905 of the company ARKEMA is an ethylene-methylacrylate-glycidylmethacrylate copolymer with 24% by weight of methylacrylate and 8% by weight of glycidylmethacrylate.

The mixtures MIX CB1-CB6 are used for preparing the blends indicated in Table 2 in a rotating cylinder (mixer), extruded in a Brabender extruder at 190°C with a residence time of 3 minutes and granulated.

**Table 2**

| | EDISTIR N1782 [parts] | Stabilizer [parts] | MIX CB [parts] | PK30 [parts] | EBCD [parts] | HYDROTALCITE at 30%w/w in EDISTIR N1782 [parts] |
|---|---|---|---|---|---|---|
| MB1 | 43.2 | 0 | MIX CB1 45.6 | 1 | 8.7 | 1.5 |
| MB2 | 0 | EXAMPLE 2 44.7 | MIX CB1 45.6 | 1 | 8.7 | 0 |
| MB3 | 0 | EXAMPLE 1 44.7 | MIX CB2 45.6 | 1 | 8.7 | 0 |
| MB4 | 31.9 | EXAMPLE 3 12,8 | MIX CB3 45.6 | 1 | 8.7 | 0 |
| MB5 | 21.0 | LOTADER AX8905 23.7 | MIX CB4 45.6 | 1 | 8.7 | 0 |
| MB6 | 0 | EXAMPLE 5 44.7 | MIX CB5 45.6 | 1 | 8.7 | 0 |
| MB7 | 0 | EXAMPLE 6 44.7 | MIX CB6 45.6 | 1 | 8.7 | 0 |

EDISTIR N1782 (Versalis S.p.A., San Donato Milanese - Italy) is a polystyrene homopolymer for general uses (GPPS) with a MFR (200°C/5kg) of 8 g/10 min.
PK30 is 2,3-dimethyl-2,3-diphenylbutane, Perkadox 30, of Akzo-Nobel. EBCD is hexabromocyclododecane, HP900, of Albemarle.

### Preparation of EPS in continuous

77 parts of polystyrene EDISTIR N1782 in the form of granules and 23 parts of granule having a composition MB1-MB7 are dry mixed in a rotating cylinder (EPS1-EPS7 in Table 3) and fed to a single-screw extruder which feeds, with a residence time of 7 minutes, at 260 bar and about 190°C, a static mixer at whose inlet 5 parts of a mixture of n-pentane (75%) and iso-pentane (25%) are added. The mixture thus obtained is distributed on holes having a diameter of 0.5 mm, immediately cooled with a jet of water and cut with a series of rotating knives as described in patent US 7,320,585. The pressure in the granulation chamber is 5 bar and the shear stress is determined so as to obtain granules having an average diameter of 1.2 mm. Water is sprayed as cooling liquid and nitrogen is used as carrier gas of the granules which are then dried with a centrifugal drier and 3 parts of glycerine monostearate, one part of zinc stearate and 0.2 parts of glycerine per 1000 parts of granules are added in a continuous screw mixer. The granules thus obtained are pre-expanded with vapour at 100°C, left to rest for a day and used for the formation of cylinders having a diameter of 260 mm and a height of 40 mm with a density ranging from 14 to 16 g/dm³. The cylinders are placed in a thermostat-regulated chamber at 70°C for two days. Test samples of 90 x 190 x 20 mm are then obtained from the thermostat-regulated cylinders for the flame-resistance tests according to the standard DIN 4102 and determination of the bromides present.

**Table 3**

| | Bromides ppm w/w | Flame height [cm] | Passing of the test according to DIN 4102 yes/no |
|---|---|---|---|
| EPS1 | 2000 | 7.6 | yes |
| EPS2 | 400 | 7.6 | yes |
| EPS3 | 290 | 9.0 | yes |
| EPS4 | 390 | 17.3 | no |
| EPS5 | 340 | 18.5 | no |
| EPS6 | 300 | 8.5 | yes |
| EPS7 | 290 | 9.5 | yes |

EPS4 is prepared with the stabilizer Styrene-Glycidylmethacrylate of Example 3. This compound has an excessively high epoxide content and is not compatible with the vinylaromatic composition. It is effective in reducing the bromides but does not pass the flame-retardant test.

EPS5 is prepared with the stabilizer LOTADER AX8905 which is a Glycidylmethacrylate but not vinylaromatic copolymer and is not compatible with the vinylaromatic composition. It is effective in reducing the bromides but does not pass the flame-retardant test

The standard DIN 4102 requires that the flame does not exceed a height of 15 cm.

### Method for determining the bromides

A weighed sample of 0.1 - 1.5 g (on the basis of the expected bromides) having a polymeric composition containing the brominated compound, is placed in a 50 ml test-tube and dissolved with 15 ml of chloroform. When the dissolution is complete, 25 ml of eluent for ion chromatography (aqueous solution of NaHCO₃ 0.0020M and Na₂CO₃ 0.0013M) are added, the test-tube is closed and the mixture stirred for 20'. At the end of the stirring, the organic phase and aqueous phase are left to separate and the latter is analyzed with Metrohm Mod. Compact 761 IC ion chromatography with a Metrohm Dual2 column (Cod. 6.1006.100) and a conductivity suppressor, with a Metrosep A Supp 4/5 pre-column (Cod. 6.1006.500). The concentration of the solution, expressed in ppm w/w, is obtained from the chromatogram.

### Preparation EXAMPLES of HIPS

The mixtures indicated in Table 4 are dry prepared in a rotating cylinder

**Table 4**

| | EDISTIR RT441M parts | EDISTIR N1910 parts | EBCD parts | F2200HM parts | Stabilizer parts |
|---|---|---|---|---|---|
| HIPS1 | 66 | 28.3 | 4.0 | 1.7 | 0 |
| HIPS2 | 66 | 0 | 4.0 | 1.7 | EXAMPLE 2 28.3 |
| HIPS3 | 72.6 | 0 | 4.5 | 0 | EXAMPLE 2 22.9 |
| HIPS4 | 72.6 | 17.4 | 4.5 | 0 | EXAMPLE 3 5.5 |

EDISTIR RT441M (Versalis S.p.A., San Donato Milanese - Italy) is high-impact polystyrene (HIPS) with a MFR (200°C/5kg) of 8 g/10 min.
EDISTIR N1910 (Versalis S.p.A., San Donato Milanese - Italy) is a polystyrene homopolymer for general uses (GPPS) lubricated with paraffin oil with a MFR (200°C/5kg) of 20 g/10 min.
F2200HM is diglycidylether of tetrabromo-bisphenol A, ICL-Industrial Products.

The mixtures thus obtained are extruded in an AMUT single-screw extruder at 190°C with a residence time of 1-2 minutes and granulated. The granules are moulded in a Battenfeld 350 press at 190°C to obtain test-samples of 127 x 12.7 x 1.59 mm for the flame-resistance tests according to the method UL-94 V as described in "Standard For Tests for Flammability of Plastic Materials For Parts in Devices and Appliances" 3 Edition, January 28, 1980. The mixtures HIPS1-3 belong to class V2 and in particular the mixture HIPS3, has a lower overall bromine content and a higher content of toughened vinylaromatic polymer with respect to HIPS1 and HIPS2. The mixture HIPS4, with the same oxirane oxygen and EBCD fraction as the HIPS3 test, does not pass the flame-resistance test. HIPS4 which is prepared with the Styrene-Glycidylmethacrylate stabilizer of Example 3, has an excessively high epoxide content and is not compatible with the vinylaromatic composition.

## Claims

1. A self-extinguishing polymeric composition which comprises:
a) a stabilizing polymeric composition containing i. from 1% by weight to 100% by weight of at least a copolymer containing as main unit monomeric units of at least a type of vinylaromatic monomer, and containing monomeric units of at least a type of vinyl monomer containing epoxy groups wherein the oxirane oxygen, calculated with respect to the whole copolymer (i), varies from 70 to 5000 ppm by weight, ii. from 0% by weight to 99% by weight of one or more vinylaromatic polymers compatible among them; such that the copolymer is homogenously distributed in the polymeric composition when the same is finely dispersed;
b) from 0.03 phr by weight to 10 phr by weight, calculated on the base of component (a), of at least a halogenated flame retardant.

2. The polymeric composition according to claim 1 wherein the copolymers (i) and the polymers (ii) further contain monomeric units of one or more vinyl monomers not containing epoxy groups.

3. The self-extinguishing polymeric composition according to claims 1 or 2 which further comprises from 0 phr to 4 phr by weight, calculated on the base of the component (a), of a synergic agent.

4. The self-extinguishing polymeric composition according to claim 3 which further comprises from 0.1 phr to 1 phr by weight, calculated on the base of the component (a), of a synergic agent.

5. The self-extinguishing polymeric composition according to anyone of the claims from 1 to 4 which further comprises from 0.2 phr by weight to 10 phr by weight, calculated on the base of the component (a), of an expanding agent.

6. The self-extinguishing polymeric composition according to claim 5 which further comprises from 1 phr by weight to 10 phr by weight, calculated on the base of the component (a), of an expanding agent.

7. The self-extinguishing polymeric composition according to anyone of the claims from 1 to 6 which further comprises from 0 phr by weight to 25 phr by weight, calculated on the base of the component (a), of an athermanous additive.

8. The self-extinguishing polymeric composition according to claim 7 which further comprises from 0.2 phr by weight to 25 phr by weight, calculated on the base of the component (a), of an athermanous additive.

9. The self-extinguishing polymeric composition according to claim 8 which further comprises from 1 phr by weight to 20 phr by weight, calculated on the base of the component (a), of an athermanous additive.

10. The self-extinguishing polymeric composition according to anyone of the claims from 7 to 9 wherein the athermanous additive is coke.

11. Expandable beads containing the self-extinguishing polymeric composition according to anyone of the claims from 5 to 10.

12. Moulded articles containing the self-extinguishing polymeric composition according to anyone of the claims from 1 to 4.

13. Polymeric foams containing the self-extinguishing polymeric composition according to anyone of the claims from 3 to 10.

## Patentansprüche

1. Eine selbstlöschende Polymerzusammensetzung, die Folgendes beinhaltet:
a) eine stabilisierende Polymerzusammensetzung, enthaltend
i. zu 1 Gew.-% bis 100 Gew.-% mindestens ein Copolymer, das als Haupteinheit Monomereinheiten von mindestens einer Art von vinylaromatischem Monomer enthält und Monomereinheiten von mindestens einer Art von Epoxygruppen enthaltendem Vinylmonomer enthält, wobei der Oxiransauerstoff, berechnet bezüglich des gesamten Copolymers (i), von 70 bis 5000 ppm nach Gewicht variiert,
ii. zu 0 Gew.-% bis 99 Gew.-% ein oder mehrere vinylaromatische Polymere, die unter sich kompatibel sind; so dass das Copolymer homogen in der Polymerzusammensetzung verteilt ist, wenn selbige fein dispergiert ist;
b) zu 0,03 phr nach Gewicht bis 10 phr nach Gewicht, berechnet auf der Basis der Komponente (a), mindestens einen halogenierten Flammhemmer.

2. Polymerzusammensetzung gemäß Anspruch 1, wobei die Copolymere (i) und die Polymere (ii) ferner Monomereinheiten von einem oder mehreren keine Epoxygruppen enthaltenden Vinylmonomeren enthalten.

3. Selbstlöschende Polymerzusammensetzung gemäß den Ansprüchen 1 oder 2, die ferner zu 0 phr bis 4 phr nach Gewicht, berechnet auf der Basis der Komponente (a), ein synergetisches Mittel beinhaltet.

4. Selbstlöschende Polymerzusammensetzung gemäß Anspruch 3, die ferner zu 0,1 phr bis 1 phr nach Gewicht, berechnet auf der Basis der Komponente (a), ein synergetisches Mittel beinhaltet.

5. Selbstlöschende Polymerzusammensetzung gemäß einem der Ansprüche 1 bis 4, die ferner zu 0,2 phr nach Gewicht bis 10 phr nach Gewicht, berechnet auf der Basis der Komponente (a), ein Blähmittel beinhaltet.

6. Selbstlöschende Polymerzusammensetzung gemäß Anspruch 5, die ferner zu 1 phr nach Gewicht bis 10 phr nach Gewicht, berechnet auf der Basis der Komponente (a), ein Blähmittel beinhaltet.

7. Selbstlöschende Polymerzusammensetzung gemäß einem der Ansprüche 1 bis 6, die ferner zu 0 phr nach Gewicht bis 25 phr nach Gewicht, berechnet auf der Basis der Komponente (a), einen athermanen Zusatz beinhaltet.

8. Selbstlöschende Polymerzusammensetzung gemäß Anspruch 7, die ferner zu 0,2 phr nach Gewicht bis 25 phr nach Gewicht, berechnet auf der Basis der Komponente (a), einen athermanen Zusatz beinhaltet.

9. Selbstlöschende Polymerzusammensetzung gemäß Anspruch 8, die ferner zu 1 phr nach Gewicht bis 20 phr nach Gewicht, berechnet auf der Basis der Komponente (a), einen athermanen Zusatz beinhaltet.

10. Selbstlöschende Polymerzusammensetzung gemäß einem der Ansprüche 7 bis 9, wobei der athermane Zusatz Koks ist.

11. Blähbare Kügelchen, welche die selbstlöschende Polymerzusammensetzung gemäß einem der Ansprüche 5 bis 10 enthalten.

12. Formartikel, welche die selbstlöschende Polymerzusammensetzung gemäß einem der Ansprüche 1 bis 4 enthalten.

13. Polymere Schaumstoffe, welche die selbstlöschende Polymerzusammensetzung gemäß einem der Ansprüche 3 bis 10 enthalten.

## Revendications

1. Une composition polymère auto-extinguible qui comprend :
a) une composition polymère stabilisante contenant
i. de 1 % en poids à 100 % en poids d'au moins un copolymère contenant en tant qu'unité principale des unités monomères d'au moins un type de monomère vinylaromatique, et contenant des unités monomères d'au moins un type de monomère vinylique contenant des groupes époxy, l'oxygène de l'oxirane, calculé par rapport au copolymère (i) entier, variant de 70 à 5 000 ppm en poids,
ii. de 0 % en poids à 99 % en poids d'un ou de plusieurs polymères vinylaromatiques compatibles entre eux ; de telle sorte que le copolymère soit distribué de manière homogène dans la composition polymère lorsque celui-ci est finement dispersé ;
b) de 0,03 pce en poids à 10 pce en poids, calculé sur la base du constituant (a), d'au moins un agent ignifugeant halogéné.

2. La composition polymère selon la revendication 1 dans laquelle les copolymères (i) et les polymères (ii) contiennent en outre des unités monomères d'un ou de plusieurs monomères vinyliques ne contenant pas de groupes époxy.

3. La composition polymère auto-extinguible selon les revendications 1 ou 2 qui comprend en outre de 0 pce à 4 pce en poids, calculé sur la base du constituant (a), d'un agent synergique.

4. La composition polymère auto-extinguible selon la revendication 3 qui comprend en outre de 0,1 pce à 1 pce en poids, calculé sur la base du constituant (a), d'un agent synergique.

5. La composition polymère auto-extinguible selon l'une quelconque des revendications 1 à 4 qui comprend en outre de 0,2 pce en poids à 10 pce en poids, calculé sur la base du constituant (a), d'un agent expansif.

6. La composition polymère auto-extinguible selon la revendication 5 qui comprend en outre de 1 pce en poids à 10 pce en poids, calculé sur la base du constituant (a), d'un agent expansif.

7. La composition polymère auto-extinguible selon l'une quelconque des revendications 1 à 6 qui comprend en outre de 0 pce en poids à 25 pce en poids, calculé sur la base du constituant (a), d'un additif athermane.

8. La composition polymère auto-extinguible selon la revendication 7 qui comprend en outre de 0,2 pce en poids à 25 pce en poids, calculé sur la base du constituant (a), d'un additif athermane.

9. La composition polymère auto-extinguible selon la revendication 8 qui comprend en outre de 1 pce en poids à 20 pce en poids, calculé sur la base du constituant (a), d'un additif athermane.

10. La composition polymère auto-extinguible selon l'une quelconque des revendications 7 à 9 dans laquelle l'additif athermane est le coke.

11. Billes expansibles contenant la composition polymère auto-extinguible selon l'une quelconque des revendications 5 à 10.

12. Articles moulés contenant la composition polymère auto-extinguible selon l'une quelconque des revendications 1 à 4.

13. Mousses polymères contenant la composition polymère auto-extinguible selon l'une quelconque des revendications 3 à 10.
